# EUROPEAN PATENT APPLICATION

(11) **EP 4 575 789 A1**
(43) Date of publication of application: **25.06.2025**
(21) Application number: 23307262.8
(22) Date of filing: 19.12.2023
(51) Int. Cl.: G06F 9/54, H04L 12/18, H04L 51/04, H04L 51/216, H04L 67/306, H04L 67/50, H04W 4/08

(54) **JOINT PROCESSING OF INTERACTIONS BY AN INTERACTIVE COMPUTING APPLICATION IN A GROUPED INTERACTIVE SESSION**

(71) Applicant: Orange, 92130 Issy-les-Moulineaux (FR)
(72) Inventor: SZCZERBAK, Michal, 02-326 Warszawa (PL); WOLNY, Grzegorz, 02-326 Warszawa (PL)
(74) Representative: Plasseraud IP

(57) **Abstract**

The invention relates to a method implemented by an interactive computing application executed by one or more servers to interact with a plurality of clients, said method comprising: based on interactions with a client in a first interactive session of said running interactive computing application, joining said client to a grouped interactive session of said running interactive computing application, said grouped interactive session being shared among a group of clients ; processing interactions with said group of clients in said grouped interactive session.

## Description

### Technical Field

This disclosure pertains to the field of interactive computing applications. More specifically, this disclosure pertains to the field of the management of grouped interactive sessions.

### Background Art

An interactive computing application, or simply "interactive application"; is an application allowing a user to obtain information or control actions, via simple interaction (in natural language or by mouse click for example). The interactive computing application may conduct a discussion with the user, for example to allow the user to gain knowledge in a specific field, or perform actions upon an input from the user.

For example, certain dialogic agents, textual assistant or "chatbots" are interactive computing applications presenting themselves as a dialogue window with the user, allowing them to obtain information or carry out tasks (or to order their carrying out). In this case, the interaction takes place via a dialog window displayed on a screen of a user terminal. The dialog agent carries out interactions in natural language with the user, via a question-and-answer game for example. Natural language interactions make it possible to determine information to provide to a user, or an action to be carried out corresponding to the user's objectives, to determine all the parameters of the action to be carried out and finally to carry out this action when all the parameters for carrying out the action are known.

Another type of interactive application concerns voice assistants. Such a voice assistant allows a user to carry out one or more interaction via a vocal dialogue with the assistant. In this case, the interaction can for example take place via a microphone and speakers, as if the user were carrying out a dialogue with a human assistant.

In certain cases, the interaction can be performed not only between the interactive computing application and a single user, but within a joint interactive session that comprises the interactive application and a plurality of users. In such case, the interactions are performed between all the users and the interactive application at once. The joint interactive session may for example correspond to groups of users interested in a same topic. Such joint interactive sessions become more and more popular, because they allow users to exchange in topics they are interested in with other users, with the support of an interactive computing application.

However, integrating an increasing number of users in joint interactive sessions also increases the resource consumption of interactive computing applications, because the management of an interaction requires computing resources such as memory and processing resources.

There is therefore the need of an interactive computing application that provides to users the benefits of joint interactive sessions while limiting the amount of computing resources required by the joint interactive sessions.

### Summary

This disclosure improves the situation.

It is proposed a method implemented by an interactive computing application executed by one or more servers to interact with a plurality of clients, said method comprising: based on interactions with a client in a first interactive session of said running interactive computing application, joining said client to a grouped interactive session of said running interactive computing application, said grouped interactive session being shared among a group of clients ; processing interactions with said group of clients in said grouped interactive session.

We designate by "client" a computing application executed by a user computing device that is able to use one or more man machine interfaces of the user computing device to render to a user messages sent by the interactive computing application, and send to the user computing application messages input by the user.

By "interactions", we designate any kind of message that is exchanged between a client and the interactive computing application. The interactions may include one or more of text messages, voice messages and video.

By "interactive session", we designate a communication session in which a client can interact with the interactive computing application and/or other clients. The interactive session may for example be a chat, an audio session, a video session, or a multimodal session that allow interactions using different modalities such as text, audio, and video.

The first interactive session is a session where a client initially interacts before being joined to the grouped interactive session. It may be for example an individual interactive session, a generic interactive session open to all the clients, or another grouped interactive session.

We designate by "individual interactive session of the interactive computing application" a session of exchange of messages between the interactive computing application and a single client.

We designate by "grouped interactive session of the interactive computing application" a session of exchange of messages between the interactive computing application and a plurality of clients. In a grouped interactive session a message sent by one client or the interactive computing application may be seen either by all the participants, or a subset of participants of the grouped interactive session. The clients that participate in a grouped interactive session are referred to "a group".

By "participant in a grouped interactive session", we designate a computing application that exchange messages in a grouped interactive session, which can be the interactive computing application, or one of the clients that participate in the grouped interactive session.

By "joining said client to a grouped interactive session", we designate making the client a participant in a grouped interactive session, "joining said client to a grouped interactive session" may be also referred to "joining the group", i.e the group of participants in the grouped interactive session.

By "processing interactions with said group of clients in said grouped interactive session", we designate analyzing, by the interactive computing application, messages sent by the clients in the grouped interactive session, determining one or more response messages or actions to perform accordingly, sending messages to one or more clients of the group in the grouped interactive session, and performing actions according to the analysis of the messages sent by the clients.

The steps of the method allow grouping a client with other clients based on its previous interactions with the interactive computing application, then jointly processing all the interactions with the clients of the group.

The steps of the method therefore allow saving computing resources because similar interactions do not need to be processed in parallel. Therefore, less processing load is required to process the interactions, and less bandwidth is required to send the messages. Computing resources such as memory can also be saved, because data relative to the interaction need to be saved once for all clients rather than duplicated for each client.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

In another aspect, it is proposed server comprising one or more processing unit configured to execute the method as defined here.

We designate by "processing unit" an electronic component capable of performing electronic or computer calculations for a function. A processing unit can designate any type of processor or electronic component capable of performing digital calculations. For example, a processing unit can be an integrated circuit, an ASIC (from the English acronym "Application-Specific Integrated Circuit", literally in French "integrated circuit specific to an application", a microcontroller, a microprocessor, a Digital Signal Processor (DSP), a processor, a Graphical Processing Unit (GPU). A processing unit according to the invention is not limited to a particular type of calculation architecture. For example, a processor can implement a Harvard or Von Neumann type architecture.

The following features, can be optionally implemented, separately or in combination one with the others:

In a number of embodiments, said processing interactions with said group of clients in said grouped interactive session comprises one or more of: sending, based on previous interactions in said grouped interactive session, a message to a plurality of clients of said group ; aggregating data from the clients of said group.

Processing and sending messages to a plurality of clients at once rather than separately for each client allows saving processing load for processing the messages and bandwidth for sending the messages. The aggregation of data also allows saving memory.

In a number of embodiments, the computer-implemented method comprises: building an interaction model for each client of the group ; sending said message to a subset of the clients of said group, said subset being determined based on the interaction models of each client of the group.

By "an interaction model of a client", we designate a model that provides insights relative to the interactions of the client by providing data representative to the interactions.

Sending a message to some clients only based on an interaction model allow sending the message only to the clients that have an interest in receiving the message. The amount of messages that are sent are therefore limited, which saves bandwidth.

In a number of embodiments, said interaction model comprises one or more of : an engagement level ; an understanding level ; a knowledge level ; a level of achievement of a goal of the client ; one or more interests expressed by the interactions of the client.

Each of the elements listed of the interaction model provide an effective solution for determining whether a client has an interest in receiving a given message. Such an interaction model therefore provides effective bandwidth savings.

In a number of embodiments, said joining is performed based on one or more of: a similarity between at least one interaction with said client and said interactive computing application in said first interactive session and one or more of : interactions with one or more other clients in one more other interactive session respectively ; interactions in said grouped interactive session and a topic of said grouped interactive session ; an interaction between said client and one or more other clients that already belong to said group.

The detection of a similarity between the interactions from a client and a group, or other clients to be joined to the group, or an interaction between a client and another client which already belongs the group, provides a good insight that the group is well adapted to the client. Therefore, a successful joining can be performed in order to achieving the resource savings according to the invention.

In a number of embodiments, said joining is conditioned upon: sending to said client a proposal to join the grouped interactive session; receiving from said client an acceptance to join the grouped interactive session.

These additional features allow a client to be joined in a group only if this client likes to. Therefore, the processing and transmission of unnecessary messages is avoided, which saves computing resources.

In a number of embodiments, the computer-implemented method comprises, once the client has joined the grouped interactive session, sending to said client a summary of the previous interactions in the grouped interactive session.

The reception of a summary of previous interactions by the client provides the client contextual information to understand ongoing interactions in the grouped interactive session, and avoids the client to send messages to get information about previous interactions. Therefore, unnecessary messages are avoided, which allows further saving resources.

In a number of embodiments, the computer-implemented method comprises removing a client of the group from the group upon the detection of one or more of: a disengagement of said client of the group ; a lack of interaction of said client of the group ; a dissimilarity between the interactions of said client of the group, and the other clients of the group.

The clients that do not have anymore an interest in the group can be removed, in order to avoid processing and transmission of unnecessary messages is avoided, which saves computing resources.

In a number of embodiments, the computer-implemented method comprises: detecting a disengagement of said client of the group ; sending one or more reengagement messages to said client of the group ; if said client remained disengaged, removing said client from the group.

The clients that do not have anymore an interest in the group can be reengaged if possible, and otherwise removed from the group, in order to avoid processing and transmission of unnecessary messages is avoided, which saves computing resources.

In a number of embodiments, the computer-implemented method comprises splitting said group into a plurality of sub-groups, based upon similarities between the interactions of each client of the group.

Splitting a group into sub-group of clients that have similar interactions allow limiting the processing and exchanges of messages to clients that are interested in that messages, thereby saving computing resources.

In a number of embodiments, said interactive computing application is one or more of: a textual assistant ; a vocal assistant ; a video assistant.

### Brief Description of Drawings

Other features, details and advantages will be shown in the following detailed description and on the figures, on which:
**Fig. 1**

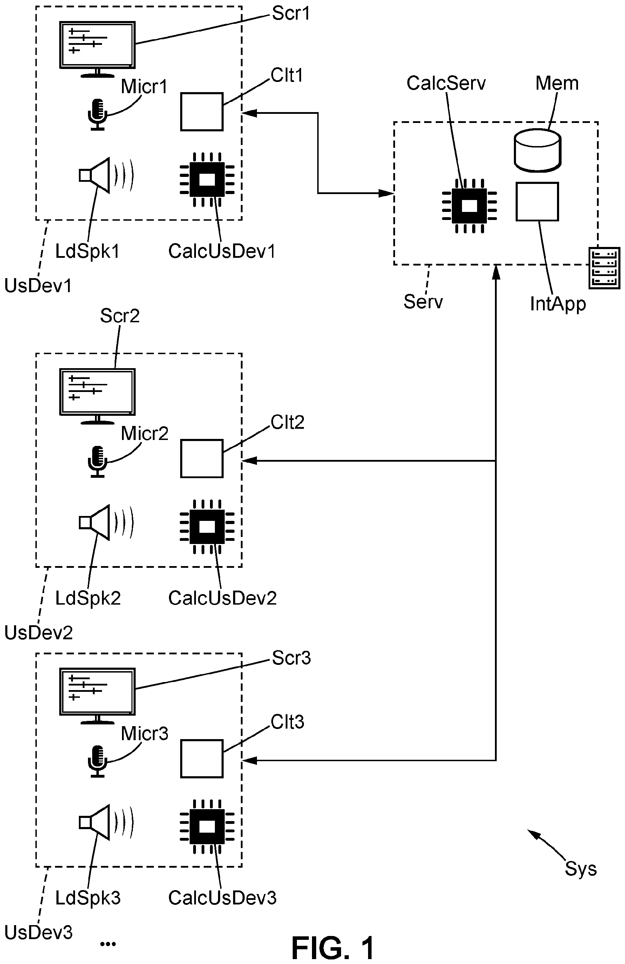

   [Fig. 1] illustrates a computing system according to an embodiment.
**Fig. 2**

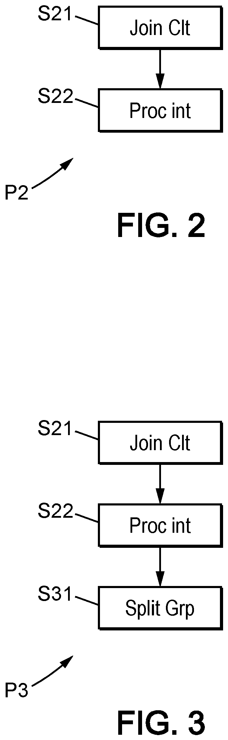

   [Fig. 2] illustrates a method according to an embodiment.
**Fig. 3**
   [Fig. 3] illustrates a method according to an embodiment that comprises a split of a group.
**Fig. 4**

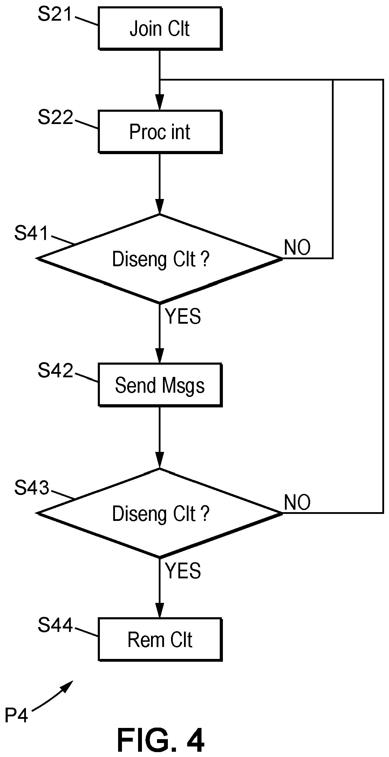

   [Fig. 4] illustrates a method according to an embodiment that comprises a detection of a disengagement of a client.

### Description of Embodiments

It is now referred to **figure 1****.**

The figure 1 represents a computing system according to an embodiment.

The computing system Sys comprises one or more servers Serv connected to a plurality of user devices UsDev1, UsDev2, UsDev3; If 3 user devices are represented in figure 1, this example is not limitative, and a computing system according to the invention may comprise, 2, 3 or more user devices connected to the server. The use device may be any user device comprising computing capabilities and man machine interfaces, such as for example a personal computer, a smartphone or a tablet. The connection between the server Serv and the user devices UsDev1 , UsDev2, UsDev3 may be any kind of suitable connection, including one or more of wired (ethernet, optical fiber...) and/or wireless (Wi-Fi, Bluetooth, 4G, 5G...) connections.

Each of the user devices comprises:
- one or more man machine interfaces ;
- one or more processing units configured to execute a client.

By "a man-machine interface of the electronic device" is meant a man-machine interface integrated or coupled to the electronic device. For example, the one or more man machine interface may comprise one or more of :
- a screen, respectively noted Scr1, Scr2, Scr3 for the user devices UsDev1, UsDev2, UsDev3 ;
- a microphone, respectively noted Micr1, Micr2, Micr3 for the user devices UsDev1, UsDev2, UsDev3;
- a loudspeaker, respectively noted LdSpk1, LdSpk2, LdSpk3 for the user devices UsDev1, UsDev2, UsDev3.

More generally, the man machine interfaces may comprise any interface that allows a user device to present information or receive outputs from a user. Even if in the figure 1 the user devices are represented with a screen, a microphone and a loudspeaker, this example is not limitative: the user devices may comprise only a part of the represented man machine interfaces and may also comprise other man machine interfaces that are not represented in the figure 1, such as for example tactile screens, cameras, haptic gloves or eye tracking interfaces.

In addition, even if the man machine interfaces are represented in figure 1 as interfaces inside the user devices, in some embodiments of the invention, the man machine interfaces may be interfaces coupled to a user devices, without being located in the user device itself. This is for example the cases of a keyboard connected to a user device through a wired or wireless connection, loudspeakers connected to a user device through a wired or wireless connection (e.g Bluetooth connection for example), etc.

The one or more servers Serv comprises:
- one or more processing unit CalcServ configured to execute an interactive computing application IntApp ;
- one or more memories Mem that are configured to store contextual information relative to the interactions of the interactive computing application IntApp with the clients Clt1, Clt2, Clt3.

The memory Mem may be any kind of data storage. It may be comprise volatile memory such as Random Access Memory (RAM), Dynamic Random-Access Memory (DRAM), Static Random Access Memory (SRAM) and/or non volatile memory such as hard disk drives, optical disks, magnetic tapes, ferroelectric RAM,etc.

Even if only one server is represented in the figure 1, the interactive computing application may be executed by a plurality of servers, for example to manage a plurality of joint interactive sessions and/or to provide redundancies between the servers and avoid a loss of service in case of failure of one server. In addition, the one or more processing unit CalcServ and one or more memories Mem may be split between a plurality of different servers. For example, in case of distributed computing in a server farm, the one or more memories Mem may be located in a server in connection to the server that executes the interactive computing application.

The interactive computing application IntApp may be of different types. It may for example be an application that allow exchanging text and/or voice and/or video messages. The interactive computing application IntApp may for example be a personal/voice/video assistant that provides to users information and help in various topics. The interactive computing application IntApp may also allow users to interact between themselves. For example, the interactive computing application IntApp may be an assistant integrated in a social network of a company that in the same time provides assistance to the user by interactions between a client and the interactive computing application IntApp, and allow the clients to exchange messages directly between themselves.

In substance, clients and user devices are able to manage the direct interactions with users, by presenting various outputs (vocal messages, text...) generated for the client by the interactive computing application IntApp, and providing to the interactive computing application IntApp the inputs of the user (e.g vocal message, textual message, etc.). The interactive computing application IntApp is able to process the inputs from the users, and produce outputs in an interactive manner. The connection between the clients and the interactive computing application therefore allow to perform an interaction between the interactive computing application IntApp and the users of the user devices.

The interactive computing application IntApp may process the interactions either in individual interactive sessions, where a single client communicates with the interactive computing application IntApp, in a generic session, where all the clients can interact, or in a grouped interactive session, where a group of clients communicate with the interactive computing application IntApp. A grouped interactive session may for example take the form of:
- a chat where a plurality of clients, and the interactive computing application IntApp write text ;
- a vocal conversation, where a plurality of clients, and the interactive computing application IntApp send voice messages ;
- a video conversation, where a plurality of clients, and the interactive computing application IntApp send video messages ;
- etc.

It is now referred to **figure 2****.**

Figure 2 represents a method according to an embodiment.

The method P2 is a method implemented by an interactive computing application such as for example the interactive computing application Applnt to interact with a plurality of clients such as for example the clients Clt1, Clt2, Clt3.

The method comprises a first step S21 of joining, based on interactions with a client in a first interactive session of said running interactive computing application, said client to a grouped interactive session of said running interactive computing application, said grouped interactive session being shared among a group of clients.

Stated otherwise, prior to the execution of the method P2, a client is interacting with the interactive computing application in a first interactive session of said running interactive computing application. The interactions may be of different nature. For example, an interaction may be an exchange of text message, showing an object to the camera, capturing through a microphone the words uttered by the user, etc. The first interactive session may be for example a generic session, an individual interactive session, or another grouped interactive session.

The interactions between the client and the interactive computing application allow grouping a client with other clients based on its previous interactions with the interactive computing application, and thus grouping the client with other client having similar interactions, or interested in the same topics.

Joining a client to a grouped interactive session can be performed in different ways. For example, the joining can be triggered by a similarity between at least one interaction from said client in said first interactive session and one or more of interactions in said grouped interactive session and a topic of said grouped interactive session.

It can for example be detected that interactions are similar when they share common features. For examples, interactions can be detected as similar if they are related to a same or similar topic, express the same level of knowledge or understanding of a topic, etc.

Stated otherwise, when it is detected that the interactions involving a client and the interactive computing application in said first interactive session are similar to :
- the interactions involving one or more other clients in one more other interactive sessions respectively
- and/or the interactions in a given grouped interactive session,
- and/or a topic of the grouped interactive session, the client can be joined to the grouped interactive session.

In practice, the joining may consist in creating a new group (i.e. a new grouped interactive session), or joining the client to an existing group (i.e. an already existing grouped interactive session).

For example, a new group can be created when it is detected that the interactions between the client and the interactive computing application are similar to the interactions between other clients and the interactive computing application, and/or when it is detected that the topic of the interactions between the client and the interactive computing application is similar to the topic of the interactions between other clients and the interactive computing application. Then, the client and the other clients can be joined to the newly created group.

Conversely, the client can be joined in an existing group, for example when it is detected that the interactions between the client and the interactive computing application is similar to interactions in said grouped interactive session, and/or when it is detected that the interactions between the client and the interactive computing application are similar to the topic of said grouped interactive session.

Identifying similarities between clients interactions can be performed in different ways. For example, one or more of the following techniques may be used by the interactive computing application:
- Text analysis: Natural Language Processing (NLP) methods can be applied by the interactive computing application to the text messages sent by a client, for example in order to extract relevant keywords or topics. A similarity score can thus be computed between the analysis of the text messages sent by different clients ;
- Audio Analysis: : this consists in analyzing audio to detect similarities. The analysis of audio can be performed in different ways. For example, the tone of the voice of the user can be analyzed to determine if a user is enthusiastic about a discussion. The background audio can also be analyzed, which can provide useful information. For example, the detection of background music may provide a hint about the kind of music a user likes. The audio can also be transcript into text to perform an analysis of the content of the words uttered by the user. To this effect, the application can utilize speech recognition and natural language processing techniques to transcribe and analyze voice messages. It can extract keywords, topics, or sentiments from the transcriptions to identify similarities in the content of the messages sent by the clients. Audio analysis can also comprise a combination of the analysis of audio signal and text transcript. For example, the tone of the voice of a user can be analyzed when he/she is talking about a given subject, thereby allowing to detect if a user is excited, bored, etc. about a given subject. The user can also provide information in relation to the audio. For example, if the user can talk about a background sound by saying "hey listen! I love this song!". Then, the analysis of speech to text transcription allows inferring that the user likes the song, and the audio analysis indicates which song it is. It thus can be determined that a user likes a given kind of music/a given artist, and the user can be integrated in a corresponding group ;
- Video Analysis: For video interactions, the application can employ computer vision algorithms to analyze visual cues, gestures, or facial expressions. It can extract relevant features from the video data and use them to identify patterns or similarities in the interactions ;
- Multimodal Analysis: By combining the analysis of voice messages and video data, the application can perform multimodal analysis. It can correlate the content of voice messages with visual cues from the video to gain a more comprehensive understanding of the interactions and identify similarities based on both audio and visual information. Such multimodal analysis could also help in determining the non-declared interest in the subject based on the client behavior itself. The multimodal analysis can comprise an analysis of the audio / video stream itself, and/or a textual transcript of the audio / video streams.

By incorporating voice analysis, video analysis, multimodal analysis, and machine learning techniques, the interactive computing application can effectively find similarities between client interactions, regardless of the medium used for communication.

When NLP methods are used to determine a similarity between interactions, the NLP methods may be used on text messages and/or other kinds of messages. In such case all modalities may be converted to the text representation: for example voice message can be converted to a text representation using speech-to-text solutions, image/video using e.g. generative AI describing the scene, etc..

Then, when all messages are in a text representation, either natively or through a conversion; the relevant keywords or topics could be extracted using NLP methods. Various metrics to measure the similarity of interests between users could be used. Some popular metrics include cosine similarity or Jaccard similarity. The application can for example set thresholds to determine when users should be grouped together based on their topic similarity. For example, if the cosine similarity between two users' interests exceeds a certain threshold (e.g., 0.7), they could be considered similar enough to be grouped together. In some embodiments, a topic can be assigned to a group, and a similarity be calculated between the messages sent by the client and the topic of the group.

In more advanced scenario the embeddings from models Large Language Models could be used as a vector representation of the larger fragments of interactions and then they could be compared in order to assure more context aware comparisons between clients' interactions. By continuously analyzing conversations, updating similarity metrics, and adjusting thresholds, the application can dynamically group users with similar interests in real-time. The models may be for example Large Language Models or smaller use attention mechanisms (i.e. transformers).

Another option for grouping a client in a group consists in detecting an interaction between said client and one or more other clients that already belong to said group. Indeed, in some embodiments, the interactive computing application also allows the clients to exchange messages between themselves. In such cases, the detection of an interaction between said client and one or more other clients that already belong to said group can trigger the joining of the client to the group, especially if the interactions are related to the topic of the group.

It is thus apparent that the joining of the client in a group allows processing similar interactions within the group, because the interactions between the client and the interactive computing application are similar to the topic of the group, interactions between other clients already in the group and the interactive computing application, interactions between other clients to be joined in the group and the interactive computing application, or because the client interacted with other clients already in the group.

In a number of embodiments, the joining of the client in the group is automatic as soon as the conditions that trigger the joining are fulfilled. However, in other alternative embodiments, a proposal can be sent to the client that may accept or reject the proposal. For example, the joining can be conditioned upon:
- sending to said client a proposal to join the grouped interactive session;
- receiving from said client an acceptance to join the grouped interactive session.

Thus, in this alternative case, the client joins the group only if this client agrees to.

When a client is joined to an existing grouped interactive session, the client may receive from the interactive computing application, once it has joined the grouped interactive session, a summary of the previous interactions in the grouped interactive session.

Thus, the client may be aware of all the previous exchanges in the grouped interactive session and will not need to ask for information that have already been exchanged. The client will also benefit from all the context to understand ongoing interactions in the group.

At the output of step S21, the method P2 comprises a second step S22 of processing interactions with said group of clients in said grouped interactive session.

Thus, the interactions can be processed once for a plurality of clients of a group, rather than independently in parallel for each client. Computer resources can thus be saved, because less processing resources are needed to perform the interactions, less bandwidth is necessary to send the messages, less memory is required to store data relative to the interactions, among others.

In general, processing, by the interactive computing application, interactions with clients in interactive sessions may notably comprise one or more of:
- receiving messages from the clients ;
- performing an analysis said received messages, and based upon the output of said analysis:
   ∘ sending back one or more response messages. Such response messages may for example comprise a response to an enquiry of one or more user, a message to get more information, information that is relevant for the users, etc. ;
   ∘ performing one or more actions. Such action may for example performing a reservation of travel tickets according to the wish of the users.

In the context of a grouped interactive sessions, processing interactions can in addition comprise sending, based on previous interactions in a group, a message to a plurality of clients of the group.

Thus, a message needs to be sent, by the interactive computing application, once for a plurality of clients of the group. This saves both processing load for processing the messages and bandwidth for sending the messages.

For example, computing resources and bandwidth can be saved in one or more of the following ways:
- by grouping users with similar interests, the interactive computing application optimizes the distribution of data and resources. This means that only relevant information and updates need to be sent to each group, reducing the overall amount of data transmitted over the network ;
- by dynamically grouping users, the interactive computing application can avoid unnecessary communication between individuals who may not have common interests. This reduces the number of messages and requests being sent, thereby saving network bandwidth ;
- as the people in group share the same interests, the interactive computing application can store the history of interactions and in case of the questions asked by newly joined people, they could be answered by the application itself without broadcasting it to the group members
- in case of joining the group after it was created, the user can obtain a brief summary from the history of interaction avoiding the need of the communication related to asking the questions and receiving answers from group members or transmission of the whole interaction history.

The data from the clients of the group can also be aggregated.

The aggregation of data can be performed in different ways. For example, the previous interactions in the group may be summarized. Therefore, only a summary of the previous interactions may need to be stored, rather than a complete save of all the interactions. Another way of aggregating user data consists in caching previously resolved issues in order to provide the answers without need to broadcast questions to the group.

The aggregation of data thus allows saving memory, but also computing and bandwidth resources.

The sending of messages by the interactive computing application in the grouped interactive session may be performed in different ways.

For example, the messages may be sent to all the users belonging to the group, or only to a subset of the users belonging to the group. For example, the messages can be sent only to the users that are expected to be interested in the message, in order to reduce the bandwidth consumption, and to avoid causing unnecessary interactions.

For example, the interactive computing application can build an interaction model for each client of the group, and sending a given message to a subset of clients of the group, the subset being determined based upon the interaction models of the clients.

The interaction model may comprise for example one or more of the elements listed below:
- an engagement level. The engagement level represents the level of engagement of a client in the group, and can be determined for example depending upon the frequency in which a client sends message in the group, the speed at which it responds to messages, but also based upon other elements such as having an open window for the grouped conversation, eye tracking that determines whether the user of reacts to the messages. Etc. More generally, the higher the engagement level, the more active is the client in the grouped interactive session ;
- an understanding level. The understanding level represents the expected level of understanding of the client in the grouped interactive session. For example, the understanding level may be determined based upon the mastery of the language of the grouped interactive session by a user, a known level of expertise of a user in the topic of the grouped interactive session, etc. The understanding level can also be determined by indirect means, such as the interactions of the client. For example, if a client asks a question about a very basic notion, it can be inferred that the understanding level of the client in the topic is low. Conversely, if the client sends very high level questions or answers, it can be inferred that his/her understanding level is high ;
- a knowledge level. The knowledge level is similar to the understanding level, but focuses in the raw knowledge of the client, while the understanding level focuses on the understanding of notions. The knowledge level can be split between knowledge relative to sub-topics. For example, if the topic of the grouped interactive session is geography, the knowledge level can be split between knowledge of the geography of different regions of the world ;
- a level of achievement of a goal of the client. This element can be implemented when a client has expressed a goal, such as for example mastering a given notion, or achieving a defined level in a topic. The interactions of the client allow determining to which extent the goal is achieved or not ;
- one or more interests expressed by the interactions of the client. The interests of the client can be inferred from his/her interactions, and ca be mapped to the interactions. The interests can be general interests or interests specific to a topic of the grouped interactive session. For example, if the grouped interactive session relates to music, some clients may show interest for classical music, while others may show interest for pop music. Such an interest can for example be detected by detecting interactions of a give user with messages relative to a certain type of music.

The elements of an interaction model listed above are provided by means of example only of elements that define an interaction of a client. An interaction model may comprise all or a part of the elements listed above, and however not restricted to the elements listed below. The interaction model may comprise any element relative characterizing the interactions of a client that the skilled person could foresee.

These elements allow sending a given only to the clients that are interested in the message. By means of concrete examples, the messages can be sent as follows:
- a highly complex message can be sent only to clients whose engagement level is above a threshold, because clients that are not very engaged in the session could become even more disengaged by a complex message. Conversely, simple and friendly message can be sent only to clients having an engagement level below a threshold, because it may re-engage them ;
- the complexity of a message can be determined, and the message can be sent only to users having an understanding level above a threshold determined according to the complexity of the message. Indeed; a too complex message could not be understood by clients having a low understanding level. Thus, not sending the message to the clients having a low understanding level avoids sending unnecessary messages ;
- similarity, the underlying knowledge allowing to understand a message can be determined, and the message can be sent only to users having a knowledge level above a threshold determined according to the underlying knowledge allowing to understand of the message. Indeed; a massage that can be understood only by users having an extensive knowledge of a given field could not be understood by clients having a low knowledge level. Thus, not sending the message to the clients having a low knowledge level avoids sending unnecessary messages ;
- a given message can also be sent only to users having a level of fulfillment of a goal below or above a given threshold. For example, a message to start performing actions to achieve a goal can be sent only to clients that have a low level of achievement of this goal.
- the topics or sub-topics that the message relates to can be determined, and the message can be sent only to the users that have an interest in the topic or sub-topic of the message. For example, a message about Mozart sent in a grouped interactive session relative to music can be determined as related to classical music but not to pop music. Thus, this message can be sent only to the users of the group for which an interest in classical music has been detected.

These examples are provided by means of concrete examples only of how messages can be sent only to some of the clients based upon the interaction models, in order to actually save computing resources and bandwidth by sending messages only to the users that have an interest in receiving the messages. It is however apparent that other rules may be defined, based upon the elements of an interaction models listed above, or other elements of an interaction models that could be foreseen by a skilled man.

It is now referred to **figure 3****.**

The figure 3 represents a method according to an embodiment that comprises a split of a group.

The method P3 comprises all the steps of the method P2. In addition, the method P3 comprises a step S31 of splitting said group into a plurality of sub-groups, based upon similarities between the interactions of each client of the group.

Stated otherwise, the step S31 consists in splitting an initial group into different sub-groups, for example to obtain groups that are more homogenous than this initial group.

The splitting into sub-groups can be performed, for example, based upon interaction models of users, or more generally based upon the features of the previous interactions of the clients of a group. For example:
- the group can be split into sub-groups corresponding to different topics. For example, a group about music in general can be split into groups about classical, pop, jazz music, etc. It is worth noted that when a group is split, a client can be joined to a single or a plurality of groups depending upon his/her interests ;
- the group can be split between different groups of levels of engagement, so that the most engaged clients are grouped together. Conversely, a large group may also be split into groups having heterogenous levels of engagements, so that each group after the split has one or more highly engaged clients ;
- the group can be split into different groups of understanding and/or knowledge levels, so that users of comparable understanding / knowledge levels can be grouped together. Therefore, users can interact with other users having a comparable level of understanding/knowledge ;
- the group can be split into sub-groups corresponding to different level of achievement of a given goal, so that users can interact with other users having a comparable level of achievement.

The split of a group can be determined by different conditions. For example:
- a group can be split when the number of participants exceeds a defined threshold;
- the group can be spit when the levels of understanding / knowledge / engagement / achievement of a goal becomes too dissimilar between the clients belonging to the group ;
- the group can be split when enough interactions have been processed to generate those interactions models of the users. Stated otherwise, the interactions models can be built based upon the successive interactions of the clients and, when the models are complete enough, the group can be split.

The groups can be modified after an initial split. For example, a client that is in a group of low knowledge and that demonstrates that he/she has gained knowledge in a given topic can be moved to a group of higher knowledge.

These examples are provided by means of non-limitative example only to demonstrate that a group can be split into sub-groups so that the clients are grouped based upon the similarities of their interactions, so that the clients exchange messages that are more focused about their interactions, thereby saving computing resources by avoiding sending unnecessary messages.

It is thus apparent that the dynamic grouping and de-grouping of clients allow saving computing resources. Another option for grouping and de-grouping clients consists of removing a client from the group upon the detection of a removal condition. The removal condition may comprise one or more of :
- a disengagement of said client of the group. The disengagement of the client may be detected for example by a low engagement level in an interaction model of the client. Removing a disengaged client from the group may allow avoiding sending messages to a client that is not sufficiently engaged to respond to the messages ;
- a lack of interaction of said client of the group. This can be detected for example by detecting a low frequency of interaction of the user in the group. Removing a client that lacks interaction allows avoiding sending messages to a client that does not react;
- a dissimilarity between the interactions of said client of the group, and the other clients of the group. Removing from the group a client whose interactions different from the interactions of the other clients allow avoiding sending messages to a client that behaves differently from the others, for example a client that is interested in topics that differ from the others, or a client that has a knowledge or understanding level that is different from the other clients of the group, or a client that has an interaction level that is dissimilar to the other clients of the group.

For example, the interactive computing application can verify the validity of the presence of a client in a group, and if needed remove the client from the group, based on one or more of the following approaches:
- Activity Levels: The application can monitor the activity levels of individual clients within the group. If a client becomes less active or shows a decline in participation over time, it may indicate a lack of interest. By tracking activity metrics such as message frequency, engagement, or contribution, the application can identify clients who may no longer align with the group's interests. Such a client can thus be removed from the group ;
- Feedback Mechanisms: The application can provide feedback mechanisms for clients to express their level of interest or satisfaction within the group. This can be in the form of surveys, ratings, or feedback prompts. By collecting feedback periodically, the application can gauge client satisfaction and identify any disinterest or lack of engagement;
- Topic Relevance: The application can analyze the relevance of topics discussed within the group to the individual clients. If a client consistently shows disinterest or does not engage with the majority of topics, it may indicate a lack of alignment. By tracking topic relevance metrics or analyzing client interactions with specific topics, the application can identify clients who may need to be reassigned to different groups ;
- Dynamic Grouping: The application can periodically evaluate the composition of the group and compare the interests and engagement levels of clients. If significant dissimilarities or lack of interest are detected, the application can initiate a group rearrangement process. This process can involve reassigning clients to different groups that better align with their interests or creating new groups based on emerging topics or preferences.

These examples demonstrate that the clients that do not have anymore an interest in a group can be removed from the group, so that the transmission of unnecessary messages is avoided, thereby saving computing resources.

It is now referred to **figure 4****.**

Figure 4 is a method according to an embodiment that comprises a detection of a disengagement of a client.

The method P4 represents a scenario where the disengagement of a client is detected, and a message is sent to reengage the client, before eventually removing the client from the group.

To this effect, the method P4 comprises all the steps of the method P2.

The method P4 further comprises a step S41 of detecting a disengagement of said client of the group.

If no disengagement is detected, the step S22 of processing interactions is re-executed, and the step S41 of detecting the disengagement is re-executed subsequently.

When a disengagement is detected, in an optional embodiment which can be implemented depending on the use or users' preferences, a step S42 of sending one or more re-engagement messages to the client may be performed at that stage. For example, the re-engagement message may consist in asking to the client if he/she needs help, if he/she is still willing to participate in the group, etc.

In this optional embodiment, after the re-engagement messages are sent, a step S43 may consist in verifying if the client remains disengaged. The step S43 may for example comprise:
- detecting a response to the reengagement messages. For example, if the client responds "Yes, I want to participate!", he/she will be considered as reengaged. Conversely, if he/she responds "no", "maybe", or does not respond at all, he/she can be considered as remaining disengaged ;
- detecting the interactions of the client after the reengagement messages. For example, if the client is not active after the reengagement messages, he/she can be considered as remaining disengaged. Conversely, if he/she starts sending new messages, he/she will be considered as re-engaged.

If the client is considered as re-engaged, the method returns to step S22: the interactions with the client are processed, and the disengagement can be subsequently re-tested.

Conversely, if it is detected at step S43 that the client remains disengaged, a step S44 of removing the client from the group will be executed.

Therefore, the clients that are really disengaged, and only these clients, are removed from the groups. Thus, unnecessary messages are avoided, thereby saving computing and bandwidth resources, while keeping as many clients as possible engaged.

The invention will now be illustrated by an illustrative conversation sample.

In this example, the interactive computing application is a virtual assistant that exchange multimodal messages (e.g text, video, vocal messages for example), the clients can interact in two groups, noted G and P, but also in a general communication channel. The messages sent in the general communication channel will be preceded by the mention (Generic), while the messages in the groups P and G will be preceded respectively by the mentions (Group P) and (Group G). In this example, 4 users A, B, C, D and E are considered. The notation of the conversation will be for example the following:
- *"(Generic) User A Message 1*" means that the user A is sending a message with the content *"Message 1*" in the general channel ;
- *"(Group G) User C Message 2*" means that the user Cis sending a message with the content *"Message 2*" in the group G.

The example below is an artificial example serving illustrative purposes only to demonstrate some of the concepts of the invention.

The sample conversation starts by messages sent by users A, B, C and D in the generic discussion:
**(Generic)** User A: *Hi everyone! I'm passionate about photography and photo editing.*
**(Generic)** User B: *That's awesome! I love photography too, especially landscape photography.*
**(Generic)** User C: *I'm more into graphic design and digital art.*
**(Generic)** User D: *Hi User C! What software do you use in your work?*

At this stage, the interactive computing application detects that users A and B share an interest in photography, and users C and D an interest in graphic design. User A and User B are then added to the group based on their shared interest - photography (Group P); User C and User D are added to the group related to graphic design (Group G)].

The virtual assistant then sends to users A and B the following notification: *"You have been added to the group about photography'.*

The virtual assistant then sends to users C and D the following notification: *"You have been added to the group about graphic design".*

The users C and D then start discussing in the group G:
**(Group G)** User C: *I am working in the Program X. I have just updated it to the newest version. I am really amazed by its new features, especially with the natural language commands you can use to create the vector graphics.*
**(Group G)** User D: *I was wondering whether I should invest it? What is the cost of it?*
**(Group G)** User C: *The yearly license cost 20Euro, so it is pretty cheap in comparison to the alternatives available on the market.*

Meanwhile, a fifth user E starts the interaction using video assistant.
**(Generic)** User E: *Hi everybody! I am User E.*

The virtual assistant detects, through Video analysis the shelf with the books related to graphic design in the background and proposes to join the group about graphic design.

The virtual assistant thus sends to user E the notification *"You are proposed to join the group about graphic design".*

User E accepts the proposal.

The following exchanges are then conducted in the group G.
**(Group G)** [Virtual Assistant to User E]: *The conversation is about the Program X and its new features. User C is very happy with the software*
**(Group G)** User E: *I've heard a lot of great things about the Program X. What is the price of it?*
**(Group G)** [Virtual Assistant to User E]: *The question was already asked. The price of yearly license is 20Euros.*
**(Group G)** User E: *Hello everybody! Have you heard about the Program Y. I am wondering how does it compare to Program X.*
**(Group G)** User C: *I know that the Program Y is better suited for editing photography, but I have no experience with it.*
**(Group G)** User E: *It is a pity,* as *I have a bunch of photos from last trip into mountains I wanted to edit.*

The virtual assistant then detects that the User E could be more interested in joining group about photography, and sends to user E the following notification: *There is another group related to photography. Do you want to switch?*

User E accepts the proposal, and switches to group P. The following discussions then occur in group P.
**(Group P)** User E: *Do you know Program Y?*
**(Group P)** User A: *Yes, of course. I use it* as *my main tool to process photos.*
**(Group P)** User E: *Could you help me in adjusting the settings for the sky in my photos* as *I am not sure how to use the dehaze filter?*
**(Group P)** User A: *It is very easy. You need to...*
**(Group P)** User E: ...
**(Group P)** User A: ...

The virtual assistant detects the lack of activity from user B, and sends to user B the notification: *"Are you still interested in the discussion?'*

User B indicates that it is no more interested in the group, and is thus removed from the group. The group P is thus rearranged by the virtual assistant to comprise only users A and E.

This illustrative example demonstrates of some of the features of the disclosure allow saving resources. For example users are grouped by interest, either by creating groups (creation of the groups P and G), placing a user in an existing group (integration of user E in group G), or moving a user from a group to another (switching user E from group G to P when it is detected that user E could be more interested in photography than graphic design). It is worth noting that the virtual assistant can use various information provided by the user interactions. For example, it can group users using the messages that are sent by the users, but also based upon information in the background, for example the title of a book that appears in the video of a user.

The virtual assistant also sends a summary of the previous discussions to E when he joins group G, and provides directly the response to questions that have already been asked (for the price of the license in this example), which avoids asking unnecessary questions. The virtual assistant in this example also removes from groups disengaged users, such as user B from group P.

All these examples demonstrate that the features of the disclosure avoid sending unnecessary messages, through an efficient grouping and de-grouping of users.

This disclosure is not limited to the methods, device and computer program described here, which are only examples. The invention encompasses every alternative that a person skilled in the art would envisage when reading this text.

## Claims

1. A method (P2) implemented by an interactive computing application (IntApp) executed by one or more servers (Serv) to interact with a plurality of clients (Clt1; Clt2; Clt3), said method comprising:
- based on interactions with a client in a first interactive session of said running interactive computing application, joining (S21) said client to a grouped interactive session of said running interactive computing application, said grouped interactive session being shared among a group of clients ;
- processing (S22) interactions with said group of clients in said grouped interactive session.

2. The computer-implemented method of claim 1, wherein said processing interactions with said group of clients in said grouped interactive session comprises one or more of:
- sending, based on previous interactions in said grouped interactive session, a message to a plurality of clients of said group ;
- aggregating data from the clients of said group.

3. The computer-implemented method of claim 2, comprising :
- building an interaction model for each client of the group ;
- sending said message to a subset of the clients of said group, said subset being determined based on the interaction models of each client of the group.

4. The computer-implemented model of claim 3, wherein said interaction model comprises one or more of:
- an engagement level ;
- an understanding level ;
- a knowledge level ;
- a level of achievement of a goal of the client;
- one or more interests expressed by the interactions of the client.

5. The computer-implemented method of any of the preceding claims, wherein said joining is performed based on one or more of:
- a similarity between at least one interaction with said client and said interactive computing application in said first interactive session and one or more of :
∘ interactions with one or more other clients in one more other interactive session respectively ;
∘ interactions in said grouped interactive session and
∘ a topic of said grouped interactive session ;
- an interaction between said client and one or more other clients that already belong to said group.

6. The computer-implemented method of any of the preceding claims, wherein said joining is conditioned upon:
- sending to said client a proposal to join the grouped interactive session;
- receiving from said client an acceptance to join the grouped interactive session.

7. The computer-implemented method of any of the preceding claims comprising, once the client has joined the grouped interactive session, sending to said client a summary of the previous interactions in the grouped interactive session.

8. The computer-implemented method of any of the preceding claims, comprising removing a client of the group from the group upon the detection (S41) of one or more of:
- a disengagement of said client of the group ;
- a lack of interaction of said client of the group ;
- a dissimilarity between the interactions of said client of the group, and the other clients of the group.

9. The computer-implemented method of any of the preceding claims, comprising:
- detecting (S41) a disengagement of said client of the group ;
- sending (S42) one or more reengagement messages to said client of the group ;
- if said client remained disengaged (S43), removing (S44) said client from the group.

10. The computer-implemented method of any of the preceding claims, comprising splitting (S31) said group into a plurality of sub-groups, based upon similarities between the interactions of each client of the group.

11. The computer-implemented method of any of the preceding claims, wherein said interactive computing application is one or more of:
- a textual assistant;
- a vocal assistant;
- a video assistant.

12. A server comprising one or more processing unit configured to execute a method according to one of claims 1 to 11.

13. Computer software comprising instructions to implement at least a part of a method according to one of claims 1 to 11 when the software is executed by a processor.

14. Computer-readable non-transient recording medium on which a software is registered to implement a method according to one of claims 1 to 11 when the software is executed by a processor.
